# EUROPÄISCHE PATENTSCHRIFT

(11) **EP 4 339 653 B1**
(45) Veröffentlichungstag und Bekanntmachung des Hinweises auf die Patenterteilung: **17.07.2024**
(21) Anmeldenummer: 22202691.6
(22) Anmeldetag: 20.10.2022
(51) Int. Cl.: G01V 8/12, G01V 8/14, G01V 8/20, G01V 8/22

(54) **OPTISCHER SENSOR**
OPTICAL SENSOR
CAPTEUR OPTIQUE

(30) Priorität: 19.09.2022 EP 22196261
(43) Veröffentlichungstag der Anmeldung: 20.03.2024
(73) Patentinhaber: Leuze electronic GmbH + Co. KG, 73277 Owen/Teck (DE)
(72) Erfinder: Prof. Dr.-Ing. Kamuf, Matthias, 81373 München (DE); Wagner, Markus, 86949 Windach (DE); Quapil, Dr., Gerald, 73277 Owen/Teck (DE); Feller, Bernhard, 86316 Friedberg (DE)
(74) Vertreter: Ruckh, Rainer Gerhard

(56) Entgegenhaltungen:
- WO-A2-99/18657
- DE-A1- 102015 117 248
- US-A1- 2018 239 055

## Beschreibung

Die Erfindung betrifft einen optischen Sensor zur Erfassung von Objekten in einem Überwachungsbereich.

Derartige optische Sensoren können beispielsweise als Lichtvorhänge oder als Lichtschranken ausgebildet sein, die nach dem Lichtschrankenprinzip arbeiten. Bei beiden Ausführungen des optischen Sensors ist an einem Rand des Überwachungsbereichs wenigstens ein Lichtstrahlen emittierender Sender mit einer zugeordneten Optik vorhanden. Weiterhin ist am gegenüberliegenden Rand des Überwachungsbereichs dem Sender ein Lichtstrahlen empfangender Empfänger zugeordnet. Der wenigstens eine Sender emittiert amplitudenmodulierte Lichtstrahlen in Form von Folgen von Lichtimpulsen. Durch Verwendung von optischen Reflektoren am gegenüberliegenden Rand des Überwachungsbereichs können Sender und Empfänger auf einer Seite des Überwachungsbereichs angeordnet sein.

Bei freiem Überwachungsbereich gelangen die Lichtstrahlen des wenigstens einen Senders ungehindert auf den zugeordneten Empfänger. Bei einem Objekteingriff wird der Strahlengang der Lichtstrahlen unterbrochen. Abhängig von den Empfangssignalen des Empfängers wird in der Auswerteeinheit ein Objektfeststellungssignal in Form eines binären Schaltsignals generiert, dessen Schaltzustände angeben, ob sich ein Objekt im Überwachungsbereich befindet oder nicht.

Der optische Sensor kann weiterhin als Distanzsensor ausgebildet sein, bei welchem Distanzen von Objekten nach einem Impuls-Laufzeit-Verfahren oder nach einem Phasenmessverfahren bestimmt werden. Im ersten Fall sendet der Sender eine Folge von Lichtimpulsen aus, wodurch eine Amplitudenmodulation im Hochfrequenzbereich erhalten wird. Im zweiten Fall ist den Lichtstrahlen eine Modulationsfrequenz im Hochfrequenzbereich aufgeprägt. Dem Sender und dem Empfänger sind jeweils wieder eine Optik zugeordnet.

Um die erforderlichen Reichweiten zu erzielen weisen derartige optische Sensoren relativ große Optiken auf, die dazu führen, dass die optischen Sensoren relativ große Bauformen aufweisen. Trotz des Einsatzes großer Optiken kann aufgrund der limitierten Signal-/ Rauschabstände der Empfangssignale des oder der Empfänger die Reichweite der optischen Sensoren nur begrenzt erhöht werden.

Die Offenbarungsschrift DE 10 2015 117248 beschreibt eine Tropfendetektionseinrichtung zur Detektion von aus einer Düse austretenden Tropfen eines Dosierventils. Die Tropfendetektionseinrichtung umfasst einen optischen Sensor sowie eine Signalerzeugungseinheit, welche dazu eingerichtet ist, ein Trägersignal mit einer definierten Pulsfrequenz zu erzeugen.

Der Erfindung liegt die Aufgabe zugrunde, einen optischen Sensor bereitzustellen, der bei kleiner Bauform eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor zur Erfassung von Objekten in einem Überwachungsbereich mit wenigstens einem Lichtstrahlen emittierenden Sender und mit wenigstens einem Lichtstrahlen empfangenden Empfänger und mit einer Auswerteeinheit. In der Auswerteeinheit wird abhängig von Empfangssignalen des Empfängers ein Objektfeststellungssignal generiert. Den Lichtstrahlen ist eine Amplitudenmodulation aufgeprägt. Die Auswerteeinheit weist einen Analog-Digital-Wandler, in welchem die Empfangssignale in einem Takt des Analog-Digital-Wandlers digitalisiert werden, ein digitales Filter, mittels dessen eine Transformation des digitalisierten Empfangssignals in ein komplexwertiges Signal erfolgt, und einen Multiplizierer, in dem das komplexwertige Signal mit einem komplexwertigen Hilfssignal multipliziert wird, auf. Am Ausgang des Multiplizierers wird ein komplexwertiges Ausgangssignal in einem Basisband, dessen Frequenzen niedriger als die Frequenzen des Bandpassignals erhalten und aus dem komplexwertigen Ausgangssignal wird das Objektfeststellungssignal generiert.

Die Erfindung betrifft weiterhin ein entsprechendes Verfahren.

Ein wesentlicher Aspekt der Erfindung besteht darin, dass in der Auswerteeinheit des optischen Sensors mittels des digitalen Filters und des Multiplizierers die hochfrequenten Empfangssignale in niederfrequente Ausgangssignale am Ausgang des Multiplizierers transformiert werden. Das Objektfeststellungssignal wird damit nicht anhand der hochfrequenten Empfangssignale, sondern anhand der niederfrequenten Ausgangssignale gewonnen. Diese niederfrequenten Ausgangssignale weisen gegenüber den hochfrequenten Empfangssignalen einen erheblich verbesserten Signal-Rausch-Abstand auf. Des Weiteren können die niederfrequenten Ausgangssignale zusätzlich gefiltert und/oder analysiert werden, was den Signal-Rausch-Abstand zusätzlich verbessert. Damit wird die Detektionssicherheit des optischen Sensors verbessert, wobei insbesondere auch höhere Reichweiten bei der Objekterfassung erzielt werden können. Dabei ist insbesondere vorteilhaft, dass die verbesserte Detektionssicherheit und Reichweite auch mit kleineren Optiken, die dem oder den Sendern bzw. Empfängern zugeordnet sind, erreicht werden können, wodurch die Baugröße des optischen Sensors reduziert werden kann.

Ein weiterer wesentlicher Aspekt der Erfindung besteht darin, dass die Funktionselemente der Auswerteeinheit, insbesondere die zur Transformation der hochfrequenten Empfangssignale in niederfrequente Ausgangssignale eingesetzten Funktionselemente, als digitale Bauelemente ausgeführt sind. Gegenüber Schaltungsanordnungen, die mit analoger Technik arbeiten, wie z.B. analoge Mischer und analoge Filter, wird eine fertigungstechnische Vereinfachung erzielt.

Besonders vorteilhaft sind Funktionselemente der Auswerteeinheit in Form einer FPGA- und/oder ASIC-Logik ausgeführt.

Insbesondere können die Funktionselemente in einem ASIC oder in einem FPGA-Baustein integriert sein.

Damit können die Funktionselemente rationell gefertigt werden, wobei zudem ASICs oder FPGA-Bausteine kleine Baugrößen aufweisen.

Weiterhin können Funktionselemente der Auswerteeinheit in Form von Software-Modulen ausgeführt sein.

Eine wesentliche Voraussetzung für eine fehlerfreie Transformation der hochfrequenten Empfangssignale in die niederfrequenten Ausgangssignale besteht darin, dass eine feste Phasenbeziehung zwischen der Multiplikation im Multiplizierer und dem Takt des Analog-Digital-Wandlers gegeben ist.

Dies wird vorteilhaft dadurch erreicht, dass der Takt des Analog-Digital-Wandlers dem Multiplizierer zugeführt oder synchronisiert ist.

Dabei kann die Rate der im Multiplizierer durchgeführten Multiplikationen dem Takt des Analog-Digital-Wandlers entsprechen, ein ganzzahliges Vielfaches des Takts des Analog-Digital-Wandlers oder ein ganzzahliger Teiler oder rationaler Faktor des Takts des Analog-Digital-Wandlers sein.

Gemäß einer vorteilhaften Ausführungsform wird im digitalen Filter eine Hilbert-Transformation durchgeführt.

Mit der Hilbert-Transformation erfolgt eine Transformation des reellen Empfangssignales in eine Zwischengröße in den komplexen Zahlenraum, wobei die Zwischengröße dem Multiplizierer zugeführt wird.

Dort erfolgt eine komplexwertige Multiplikation mit einer komplexwertigen Hilfsgröße d.h. einer weiteren Größe im komplexen Zahlenraum. Durch die Hilbert-Transformation wird eine Zwischengröße im Zeitbereich erhalten. Durch die Multiplikation mit der komplexwertigen Hilfsgröße erfolgt die Transformation des hochfrequenten Empfangssignals in ein Ausgangssignal innerhalb eines niederfrequenten Basisbands. Vorteilhaft sind die Frequenzen des Basisbands um eine oder mehrere Größenordnungen niedriger als die Frequenzen des Empfangssignals.

Gemäß einer zweckmäßigen Ausgestaltung ist das digitale Filter ein FIR-Filter oder ein IIR-Filter.

Besonders vorteilhaft wird mittels des digitalen Filters das digitalisierte Empfangssignal gefiltert.

Das digitale Filter hat damit eine Doppelfunktion. Neben der Durchführung der Transformation des Empfangssignals in die komplexe Zahlenebene dient das digitale Filter zusätzlich zur Filterung der Empfangssignale. Insbesondere werden mit dem digitalen Filter störende Spektralanteile im Basisband unterdrückt, was durch modifizierte Parameter oder zusätzliche Filterkoeffizienten im digitalen Filter erzielt werden kann.

Gemäß einer vorteilhaften Ausführungsform ist eine feste Phasenbildung zwischen der Modulation der Lichtstrahlen und dem Takt des Analog-Digital-Wandlers gegeben.

Dies ist insbesondere dann vorteilhaft, wenn mit dem optischen Sensor Distanzmessungen durchgeführt werden, die nach einem Impuls-Laufzeit-Verfahren oder Phasenmessverfahren erfolgen. Dort muss hochgenau der Zeitversatz von Lichtstrahlen, die vom Sender ausgesendet werden, und dem von einem Objekt zum Empfänger zurückreflektierten Lichtstrahlen bestimmt werden. Durch die feste Phasenbeziehung zwischen der Modulation der Lichtstrahlen und dem Takt des Analog-Digital-Wandler können systematische Fehler bei der Distanzmessung ausgeschlossen werden.

Gemäß einer vorteilhaften Ausführungsform wird eine Unterabtastung der hochfrequenten Empfangssignale dadurch erhalten, dass eine dem Takt des Analog-Digital-Wandlers entsprechende Wandlerfrequenz des Analog-Digital-Wandlers niedriger ist als die Modulationsfrequenz der Lichtstrahlen.

Vorteilhaft wird der Analog-Digital-Wandler mit einer Wandler-Steuerung gesteuert.

Weiterhin vorteilhaft ist dem Analog-Digital-Wandler ein Filter vorgeordnet.

Zweckmäßig ist das Filter ein Bandpass- oder Tiefpass-Filter.

Mit dem zusätzlichen Filter werden unerwünschte Frequenzanteile im Empfangssignal ausgefiltert, bevor dessen Digitalisierung mittels des von der Wandlersteuerung gesteuerten Analog-Digital-Wandlers erfolgt.

Der erfindungsgemäße optische Sensor kann gemäß einer ersten Variante nach dem Lichtschrankenprinzip arbeiten.

Dann wird in der Auswerteeinheit durch Überprüfen, ob in dem komplexwertigen Ausgangssignal eine der Modulation der Lichtstrahlen entsprechende Modulation vorhanden ist, eine Strahlunterbrechung oder Nichtunterbrechung der Lichtstrahlen festgestellt.

Insbesondere kann der optische Sensor eine Lichtschranke oder ein Lichtvorhang sein.

Im Fall einer Lichtschranke ist ein Sender-Empfänger-Paar, im Fall eines Lichtvorhangs sind mehrere Sender-Empfänger-Paare mit jeweils einem Sender und einem zugeordneten Empfänger vorgesehen, die an gegenüberliegenden Rändern des Überwachungsbereichs angeordnet sind.

Bei freiem Überwachungsbereich treffen die Lichtstrahlen des oder eines Senders ungehindert auf den zugeordneten Empfänger. Bei einem Objekteingriff im Überwachungsbereich wird der Strahlengang der Lichtstrahlen des oder wenigstens eines Senders unterbrochen.

Gemäß einer zweiten Ausführungsart ist der optische Sensor eine Reflexions-Lichtschranke oder ein Reflexions-Lichtvorhang. Auch in diesem Fall sind ein oder mehrere Sender-Empfänger-Paare vorgesehen, wobei jedoch der Sender und Empfänger des oder jedes Sender-Empfänger-Paars am selben Rand des Überwachungsbereichs, vorzugsweise nebeneinanderliegend, angeordnet sind. Am anderen Rand des Überwachungsbereichs befindet sich ein Reflektor. Der Reflektor kann als passiver oder kooperativer Reflektor, d.h. als Retroreflektor oder als Reflektor, der die Wellenlänge oder Polarisation des auftreffenden Lichts ändert, ausgebildet sein. Besonders vorteilhaft ist es, wenn der Reflektor den reflektierten Lichtstrahl örtlich versetzt reflektiert, da dann Empfänger und Sender mit Abstand angeordnet sein können. Ein weiterer Vorteil ist, dass Objekte mit reflektierender Oberfläche keine Fehlfunktionen verursachen.

Bei freiem Überwachungsbereich durchqueren die Lichtstrahlen des oder eines Senders den Überwachungsbereich, treffen dann auf den Reflektor und werden dann ungehindert zum zugeordneten Empfänger geführt. Bei einem Objekteingriff im Überwachungsbereich wird der Strahlengang der Lichtstrahlen des oder wenigstens eines Senders unterbrochen.

Bei beiden Ausführungsarten wird in der Auswerteeinheit durch Auswertung der Empfangssignale des oder der Empfänger als Objektfeststellungssignal ein binäres Schaltsignal generiert, dessen Schaltzustände angeben, ob sich ein Objekt im Überwachungsbereich befindet oder nicht.

Der optische Sensor kann weiterhin als Lichttaster ausgebildet sein, der im Überwachungsbereich vorhandene Objekte dadurch detektiert, dass von dessen Sender emittierte Lichtstrahlen vom Objekt zum Empfänger zurückreflektiert werden. Ist kein Objekt im Überwachungsbereich vorhanden, werden die Lichtstrahlen des Senders nicht zum Empfänger zurückreflektiert.

In diesem Fall Liegt eine Objektdetektion vor, wenn in der Auswerteeinheit die Modulation der Lichtstrahlen empfangsseitig erkannt wird.

Gemäß einer weiteren Ausführungsform ist der optische Sensor als Distanzsensor ausgebildet, der vorteilhaft nach einem Impuls-Laufzeit-Verfahren oder Phasenmessverfahren arbeitet.

Dann wird in der Auswerteeinheit eine Phasenverschiebung des komplexwertigen Ausgangssignals gegenüber den modulierten, vom Sender ausgesendeten Lichtstrahlen ermittelt.

Vorteilhaft wird die Modulation der Lichtstrahlen in ihrer Frequenz und/oder Phase variiert.

Dadurch kann der Eindeutigkeitsbereich der Phasenmessung erhöht werden, so dass in einem größeren Distanzbereich Objekte erfasst werden können.

Gemäß einer vorteilhaften Variante emittiert der Sender Lichtstrahlen in Form von Amplitudenmodulationen aufweisenden Bursts oder Chirps.

Dann kann eine grobe Distanzmessung durch die Ermittlung des zeitlichen Versatzes des emittierten und empfangenen Bursts oder Chirps ermittelt werden.

Dabei wird der zeitliche Versatz als ganzzahliges Vielfaches von Perioden des Bursts oder Chirps ermittelt.

Weiterhin kann eine Fein-Distanzmessung durch Ermittlung der Phasenverschiebung des emittierten und empfangenen Bursts oder Chirps ermittelt werden.

Vorteilhaft wird die Phasenmessung über mehrere Perioden des Bursts oder Chirps durchgeführt.

Bei dieser Methode werden die Vorteile einer Laufzeit- und Phasenmessung kombiniert, wodurch besonders genaue Distanzmessungen möglich sind.

Für den Einsatz im Bereich der Sicherheitstechnik, insbesondere des Personenschutzes ist der optische Sensor als Sicherheitssensor ausgebildet. Der Sicherheitssensor weist einen fehlersicheren Aufbau auf, was durch eine redundante, insbesondere zweikanalige Auswerteeinheit realisiert werden kann.

Die Erfindung wird im Folgenden anhand der Zeichnungen erläutert. Es zeigen:
- Figur 1:: Ausführungsbeispiel des erfindungsgemäßen optischen Sensors in Form einer Lichtschranke.
- Figur 2:: Ausführungsbeispiel des erfindungsgemäßen optischen Sensors in Form eines Lichtvorhangs.
- Figur 3:: Ausführungsbeispiel des erfindungsgemäßen optischen Sensors in Form einer Reflexions-Lichtschranke.
- Figur 4:: Ausführungsbeispiel des erfindungsgemäßen optischen Sensors in Form eines Reflexions-Lichtvorhangs.
- Figur 5:: Ausführungsbeispiel des erfindungsgemäßen optischen Sensors in Form eines Distanzsensors.
- Figur 6:: Blockschaftsbild der Signalisierung des optischen Sensors.
- Figur 7:: Funktionsdiagramm eines Hilbert-Mischers des optischen Senors.
- Figur 8:: Funktionsdiagramm einer Hilbert-Transformation.
- Figur 9:: Spektraldiagramm für Funktionselemente der Auswerteeinheit des optischen Sensors.
- Figur 10:: Blockdiagramm einer Sender-Empfänger-Steuerung eines optischen Sensors.
- Figur 11:: Blockdiagramm einer Sender-Empfänger-Steuerung eines weiteren optischen Sensors.
- Figur 12:: Blockdiagramm einer Sender-Empfänger-Steuerung in 2-kanaliger Ausführung.
- Figur 13:: Weiteres Blockdiagramm einer Sender-Empfänger-Steuerung.
- Figur 14:: Erstes Funktionsdiagramm für eine Distanzmessung mit dem optischen Sensor.
- Figur 15:: Zweites Funktionsdiagramm für eine Distanzmessung mit dem optischen Sensor.
- Figur 16:: Auswerteschema für die Distanzmessung gemäß Figur 14.

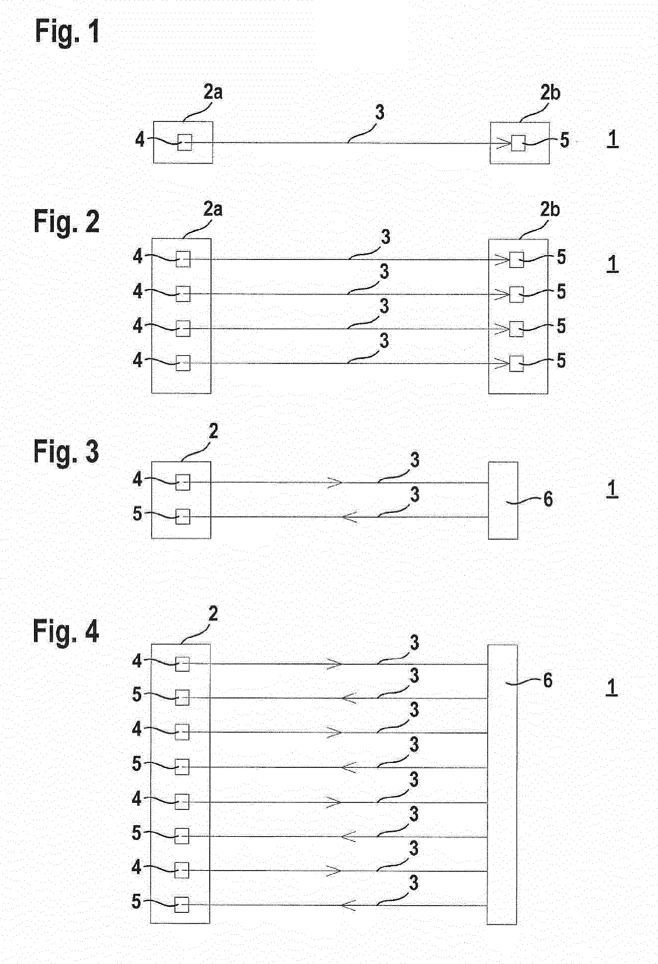

Figur 1 zeigt ein Ausführungsbeispiel des erfindungsgemäßen optischen Sensors 1 in Form einer Lichtschranke. Die Lichtschranke umfasst ein erstes Gehäuse 2a an einem ersten Rand eines Überwachungsbereichs, wobei in diesem Gehäuse 2a ein Lichtstrahlen 3 emittierender Sender 4 integriert ist. Weiterhin ist am gegenüberliegenden Rand des Überwachungsbereichs ein zweites Gehäuse 2b angeordnet, in dem ein Lichtstrahlen 3 empfangender Empfänger 5 integriert ist.

Der Sender 4 und der Empfänger 5 bilden ein Sender-Empfänger-Paar.

Wie auch in allen weiteren Ausführungsbeispielen ist dem Sender 4 eine nicht dargestellte Sendeoptik zugeordnet und dem Empfänger 5 eine Empfangsoptik zugeordnet. In der Frontwand jedes Gehäuses 2a, 2b befindet sich jeweils eine ebenfalls nicht dargestellte Frontscheibe, durch welche die Lichtstrahlen 3 geführt sind.

Figur 2 zeigt ein Ausführungsbeispiel des erfindungsgemäßen optischen Sensors 1 in Form eines Lichtvorhangs. Der Lichtvorhang ist gegenüber der Lichtschranke dahingehend erweitert, dass im Gehäuse 2a eine Reihenanordnung von Lichtstrahlen 3 emittierenden Sendern 4 vorgesehen ist. Entsprechend ist im Gehäuse 2b eine Reihenanordnung von Empfängern 5 vorgesehen. Jeweils ein Sender 4 und ein zugeordneter Empfänger 5, auf welchen bei freiem Überwachungsbereich die Lichtstrahlen 3 dieses Senders 4 geführt sind, bilden ein Sender-Empfänger-Paar.

Bei den Ausführungsformen der Figuren 1 und 2 treffen bei freiem Überwachungsbereich die Lichtstrahlen 3 des oder eines Senders 4 ungehindert auf den zugeordneten Empfänger 5. Bei einem Objekteingriff im Überwachungsbereich wird der Strahlengang der Lichtstrahlen 3 des oder wenigstens eines Senders 4 unterbrochen.

Gemäß einer zweiten Ausführungsart ist der optische Sensor 1 eine Reflexions-Lichtschranke (Figur 3) oder ein Reflexions-Lichtvorhang (Figur 4). Auch in diesem Fall sind ein oder mehrere Sender-Empfänger-Paare vorgesehen, wobei jedoch der Sender 4 und Empfänger 5 des oder jedes Sender-Empfänger-Paars am selben Rand des Überwachungsbereichs nebeneinanderliegend oder mit Abstand in einem Gehäuse 2 angeordnet sind. Am anderen Rand des Überwachungsbereichs befindet sich ein Reflektor 6. Der Reflektor 6 kann als passiver oder kooperativer Reflektor 6, d.h. als Retroreflektor oder als Reflektor 6, der die Wellenlänge oder Polarisation des auftreffenden Lichts ändert, ausgebildet sein. Des Weiteren kann der Reflektor das Licht über Spiegel- und/oder Prismenanordnung örtlich versetzt reflektieren (nicht gezeigt).

Bei freiem Überwachungsbereich durchqueren die Lichtstrahlen 3 des oder eines Senders 4 den Überwachungsbereich, treffen dann auf den Reflektor 6 und werden dann ungehindert zum zugeordneten Empfänger 5 geführt. Bei einem Objekteingriff im Überwachungsbereich wird der Strahlengang der Lichtstrahlen 3 des oder wenigstens eines Senders 4 unterbrochen.

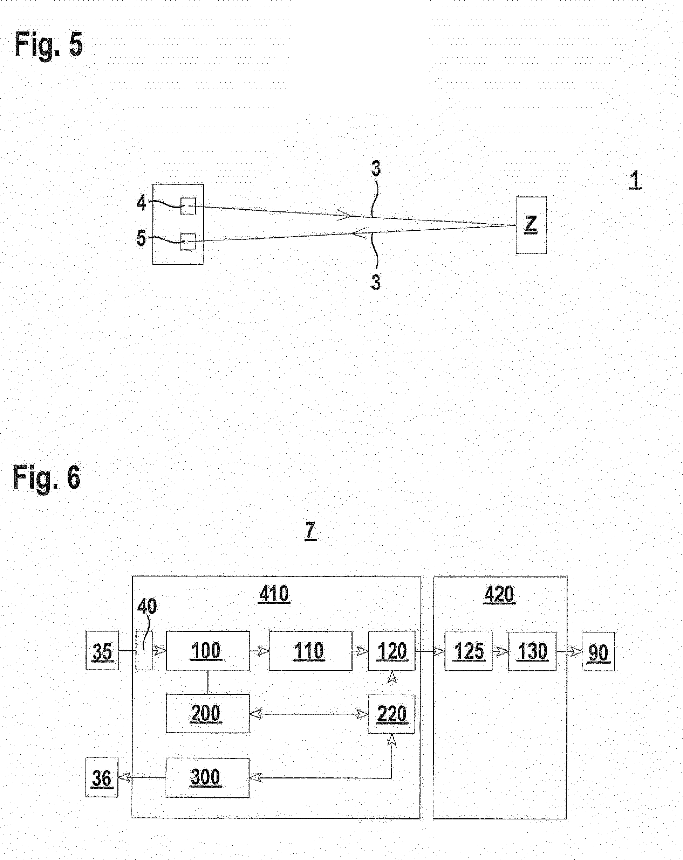

Bei beiden Ausführungsarten wird in einer Auswerteeinheit 7 (dargestellt in Figur 6) durch Auswertung der Empfangssignale des oder der Empfänger 5 als Objektfeststellungssignal ein binäres Schaltsignal generiert, dessen Schaltzustände angeben, ob sich ein Objekt im Überwachungsbereich befindet oder nicht.

Der optische Sensor 1 kann weiterhin als Lichttaster ausgebildet sein, der im Überwachungsbereich vorhandene Objekte dadurch detektiert, dass von dessen Sendern 4 emittierte Lichtstrahlen 3 vom Objekt zum Empfänger 5 zurückreflektiert werden. Ist kein Objekt im Überwachungsbereich vorhanden, werden die Lichtstrahlen 3 des Senders 4 nicht zum Empfänger 5 zurückreflektiert.

Gemäß einer weiteren Ausführungsform ist der optische Sensor 1 als Distanzsensor ausgebildet, der vorteilhaft nach einem Impuls-Laufzeit-Verfahren und/oder Phasenmessverfahren arbeitet.

Figur 5 zeigt den Aufbau eines optischen Sensors 1 in Form eines Distanzsensors oder Lichttasters. Der Sender 4 und der Empfänger 5 sind in einem Gehäuse 2 integriert. Mit den Lichtstrahlen 3 wird ein Zielobjekt Z detektiert.

Figur 6 zeigt ein Blockschaltbild des erfindungsgemäßen optischen Sensors 1.

Die Auswerteeinheit 7 ist unterteilt in einen Block 410 mit Funktionselementen, die bei einer hohen Abtastrate von Empfangssignalen des oder der Empfänger 5 arbeiten, und in einen Block 420 mit Funktionselementen, die bei einer niedrigen Abtastrate arbeiten.

Die Empfangssignale des oder der Empfänger 5 werden über einen Signaleingang 35 dem Block 410 zugeführt. Bei einem Lichtvorhang oder Reflexions-Lichtvorhang, der mehrere Empfänger 5 aufweist werden die Empfangssignale der einzelnen Empfänger 5 einzeln und zeitlich versetzt über Multiplexer, Schieberegister oder dergleichen dem Block 410 zugeführt.

Den Lichtstrahlen 3 des oder jedes Senders 4 wird erfindungsgemäß eine Amplitudenmodulation aufgeprägt, die auch in Form einer Folge von Lichtimpulsen ausgebildet sein kann.

Diese Modulation wird in einer Modulationseinheit 300 generiert und über einem Signalausgang 36 an den jeweiligen Sender 4 ausgegeben, wenn der oder ein Sender 4 mit dem oder den Empfängern 5 in einem Gehäuse 2 integriert sind. (Ausführungsbeispiel der Figuren 3 bis 5). Für den Fall, dass der oder die Sender 4 und Empfänger 5 in separaten Gehäusen 2a, 2b angeordnet sind (Ausführungsbeispiele der Figuren 1 und 2), ist im Gehäuse 2a eine separate Sendersteuerung vorgesehen.

Im Block 410 ist ein Analog-Digital-Wandler 100 vorgesehen, der von einer Wandler-Steuerung 200 gesteuert wird. Dem Analog-Digital-Wandler 100 kann ein Bandpass- oder Tiefpassfilter 101 als Antialiasing-Filter vorgeordnet sein.

Mit dem Analog-Digital-Wandler100 erfolgt in einem vorgegebenen Takt die Digitalisierung der Empfangssignale.

In einem digitalen Filter 110 erfolgt eine Transformation der reellwertigen Empfangssignale in ein komplexwertiges Signal in der komplexen Zahlenebene. Im vorliegenden Fall wird im digitalen Filter 110 eine Hilbert-Transformation durchgeführt.

Das komplexwertige Signal zum Ausgang des digitalen Filters 110 wird in einem Multiplizierer 120 mit einem komplexwertigen Hilfssignal, das in einer Signaleinheit 220 generiert wird, multipliziert.

Dadurch wird das hochfrequente Empfangssignal in ein niederfrequentes Ausgangssignal am Ausgang des Multiplizierers 120 transformiert, dessen Frequenz innerhalb eines Basisbands liegen.

Die Wandler-Steuerung 200 steuert nicht nur den Analog-Digital-Wandler 100, sondern auch die Signaleinheit 220. Dadurch ist eine feste Phasenbeziehung zwischen der Multiplikation im Multiplizierer 120 und dem Takt des Analog-Digital-Wandlers 100 gegeben.

Vorteilhaft entspricht die Rate der im Multiplizierer 120 durchgeführten Multiplikationen dem Takt des Analog-Digital-Wandlers100. Alternativ ist die Rate ein ganzzahliges Vielfaches des Takts des Analog-Digital-Wandlers 100 oder ein ganzzahliger Teiler oder rationaler Faktor des Takts des Analog-Digital-Wandlers 100.

Das niederfrequente Ausgangssignal am Ausgang des Multiplizierers 120 wird im Block 410 weiterverarbeitet.

Optional ist eine Vorverarbeitungseinheit 125 vorgesehen, in der der Betrag des komplexwertigen Ausgangssignals gebildet wird. In einer Auswertestufe 130 erfolgt dann die Auswertung des Ausgangssignals um ein Objektfeststellungssignals zu generieren, das über einen Signalausgang 90 ausgegeben wird.

Bei einem optischen Sensor 1 in Form einer Lichtschranke, eines Lichtvorhangs, einer Reflexions-Lichtschranke, eines Reflexions-Lichtvorhangs oder eines Lichttasters ist das Objektfeststellungssignal ein binäres Schaltsignal, dessen Schaltzustände angeben, ob ein Objekt im Überwachungsbereich vorhanden ist, oder nicht. Bei einem optischen Sensor 1 in Form eines Distanzsensors können Distanzwerte ermittelt und am Signalausgang 90 ausgegeben werden. Durch eine Schwellwertbewertung von Distanzwerten kann auch in diesem Fall ein binäres Schaltsignal generiert werden.

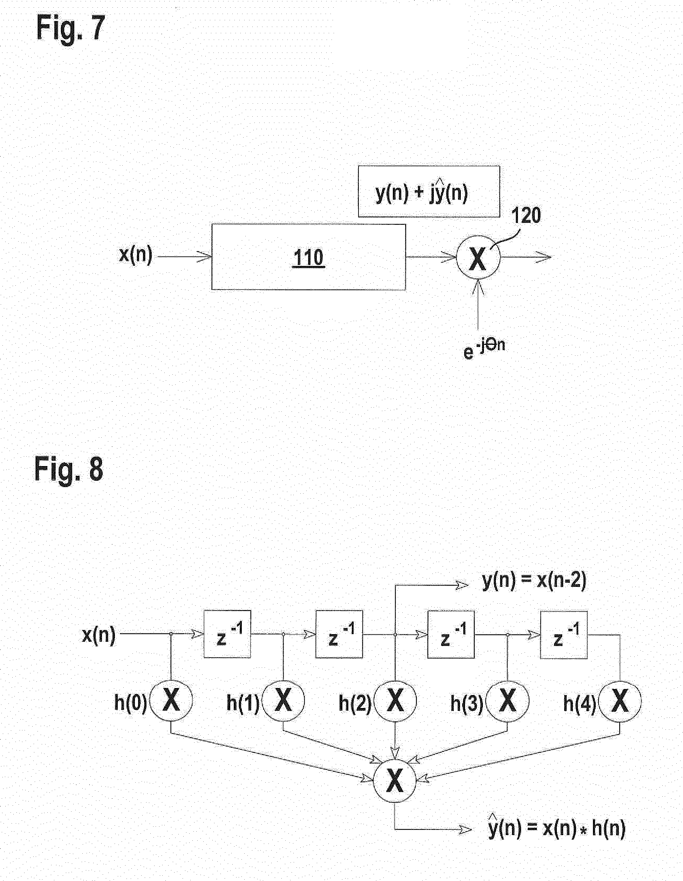

Figur 7 zeigt ein Funktionsdiagramm der Signalverarbeitung im Block 410 der Auswerteeinheit 7 gemäß Figur 7.

Das reelle, digitalisierte Empfangssignal x(n) wird im digitalen Filter 110 einer Hilbert-Transformation unterzogen, wodurch das komplexwertige Signal x(n) + jŷ(n) (j = imaginäre Einheit) gebildet wird. Dieses Signal im Zeitbereich wird vom Multiplizierer 120 mit dem komplexwertigen Signal e^{-jΘ} multipliziert. Dadurch wird das hochfrequente Empfangssignal x(n) in ein Ausgangssignal in einem niederfrequenten Basisband transformiert.

Figur 8 zeigt das Funktionsdiagramm der im digitalen Filter 110 durchgeführten Hilbert-Transformation. Das digitalisierte Empfangssignal wird mit Verzögerungselementen z¹ jeweils um einen Verarbeitungstakt verzögert und jeweils mit einem Filterkoeffizient h(o), h(1), h(2), h(3), h(4) des digitalen Filters 110 multipliziert. Die einzelnen Produkte werden summiert, womit sich das Ergebnis ŷ(n) = x(n) * h(n) ergibt, wobei * ein Faltungsoperator ist.

Die Filterkoeffizienten h(n) des digitalen Filters 110 entsprechen z.B. der Impulsantwort im Zeitbereich.

Im vorliegenden Beispiel ist das digitale Filter 110 ein FIR-Filter mit vier Verzögerungselementen z¹ und zwei Ausgängen, wobei der Ausgang ŷ(n) einen um zwei Takte verzögerten Realteil y(n) = x(n-2) erzeugt. Über die Summierung der mit den Filterkoeffizienten h(0), h(1), h(2), h(3), h(4) bewerteten Verzögerungsausgängen wird der Imaginärteil ŷ(n) erzeugt. Insgesamt wird dadurch als Zwischengröße das komplexwertige Signal ŷ(n) + jŷ(n) erhalten.

Gemäß einer vorteilhaften Weiterbildung wird mittels des digitalen Filters 110 das digitalisierte Empfangssignal gefiltert.

Dies kann durch eine geeignete Wahl der Filterkoeffizienten des digitalen Filters 110 bewerkstelligt werden.

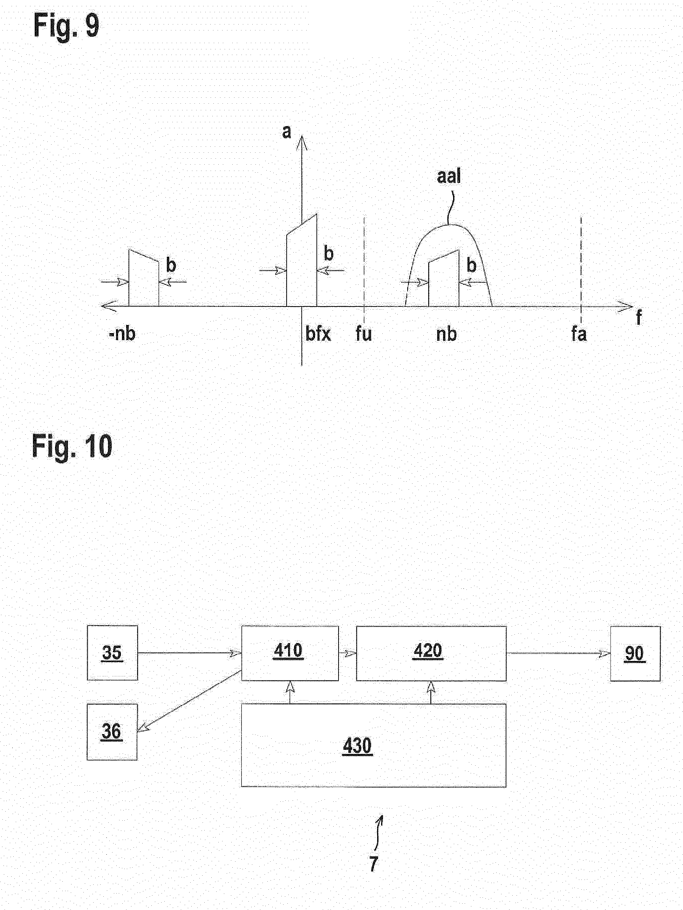

Figur 9 zeigt das Spektrum für die Anordnungen der Figuren 6 bis 8. In Figur 9 sind die Pegel der Frequenzteile a der jeweiligen Signale abhängig von der Frequenz f aufgetragen.

Dabei ist b die Breite des Nutzsignalspektrums nb oder -nb und bfx ein komplexwertiges Basisbandspektrum gleicher Breite. Mit nb, -nb ist das Spektrum im hochfrequenten Bereich des Nutzsignals bezeichnet.

Mit fa ist die Abtastfrequenz und mit fu die reduzierte Abtastfrequenz bei einer Unterabtastung bezeichnet. Schließlich ist mit aal die Durchlassbereich eines Antialising-Filters, der zusätzlich einsetzbar ist, bezeichnet.

Figur 10 zeigt eine Sender-Empfänger-Steuerung für einen optischen Sensor 1 gemäß den Figuren 3 bis 5, bei welchem Sender 4 und Empfänger 5 in einem Gehäuse 2 integriert sind.

Figur 10 zeigt die Blöcke 410, 420 gemäß Figur 6, wobei diese von einer Ablaufsteuerung 430 gesteuert werden. Der Signaleingang 35 und der Signalausgang 36 für die Sendermodulation sind mit dem Block 410 verbunden, der Signalausgang 90 ist mit dem Block 420, entsprechend dem Ausführungsbeispiel gemäß Figur 6 verbunden.

Die Blöcke 410, 420, 430 können komplett in Form von Softwaremodulen realisiert sein. Alternativ können einzelne Funktionselemente, insbesondere Block 410, als FPGA oder ASIC-Schaltungen realisiert sein um hohe Abtastraten zu ermöglichen. Funktionselemente mit niedrigen Abtastraten können als Software-Module realisiert sein.

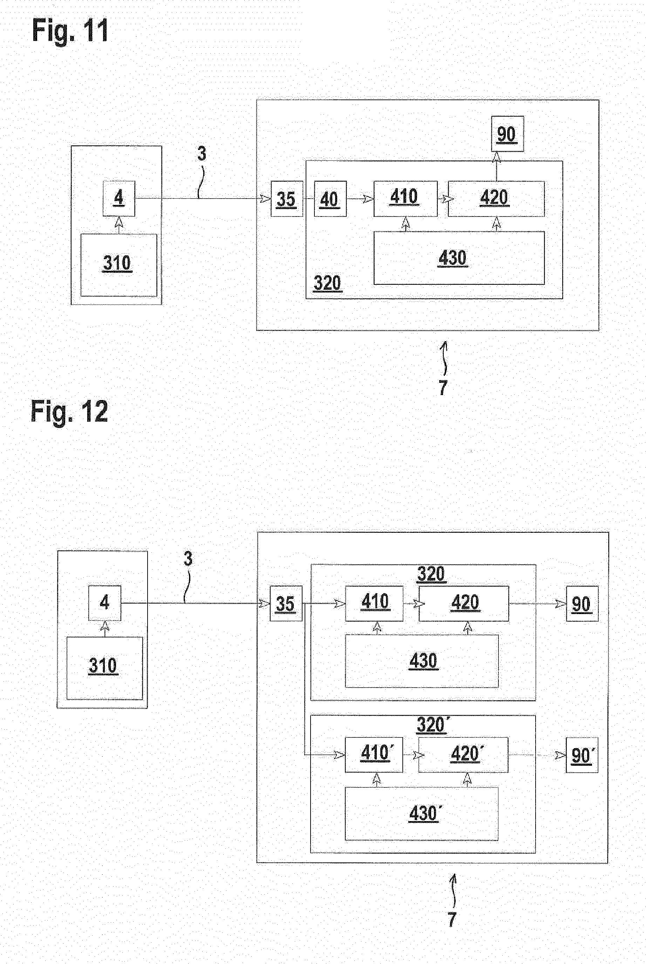

Figur 11 zeigt eine Sender-Steuerung und eine Empfänger-Steuerung für einen optischen Sensor 1 gemäß den Figuren 1 und 2, bei welchem dessen Sender 4 und Empfänger 5 in getrennten Gehäusen 2a, 2b angeordnet sind.

In diesem Fall werden der oder die Sender 4 von einer Sendersteuerung in Form eines Sender-Controllers 310 gesteuert.

Die empfangsseitigen Funktionselemente entsprechen im Wesentlichen der Ausführungsform gemäß Figur 10, wobei in diesem Fall der Signalausgang 36 nicht benötigt wird. Die Blöcke 410, 420, die Ablaufsteuerung 430 und ein optionales Antialiasing-Filter 40 sind in einem Empfänger-Controller 320 integriert.

Figur 12 zeigt eine Erweiterung der Ausführungsform gemäß Figur 11 dahingehend, dass die Auswerteeinheit 7 einen redundanten, zweikanaligen Aufbau aufweist. Der optische Sensor 1 bildet damit einen Sicherheitssensor. Sämtliche weitere Ausführungsformen des optischen Sensors 1 können ebenfalls als Sicherheitssensors ausgebildet sein.

Bei der Ausführungsform gemäß Figur 12, ist die Zweikanaligkeit der Auswerteeinheit 7 derart ausgeführt, dass zwei Kanäle mit zwei Empfänger-Controllern 320, 320' vorgesehen sind, auf welchen jeweils ein Block 410, 410', ein Block 420, 420' und eine Ablaufsteuerung 430, 430'vorgesehen sind. Das Empfangssignal am Signaleingang 35 wird bei den Kanälen zugeführt. Beide Kanäle weisen einen eigenen Signalausgang 90, 90' auf.

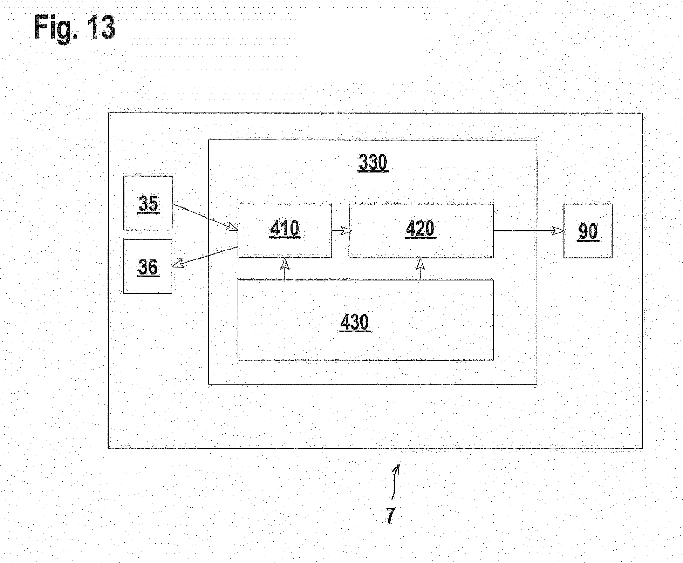

Figur 13 zeigt ein Blockdiagramm einer Sender-Empfänger-Steuerung für einen optischen Sensor 1 in Form eines Distanzsensors, bei dem Sender 4 und Empfänger 5 in einem Gehäuse 2 integriert sind.

Der Aufbau der Sender-Empfänger-Steuerung entspricht der Ausführungsform gemäß Figur 10, wobei die Blöcke 410, 420 und die Ablaufsteuerung 430 auf einen Sender-Empfänger-Controller 330 implementiert sind.

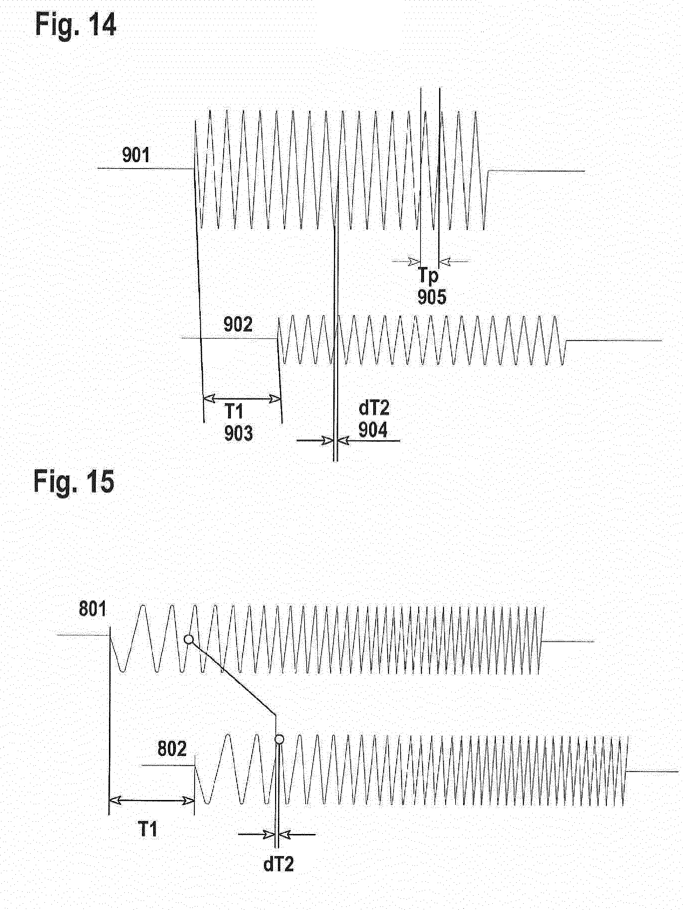

Figur 14 zeigt ein Beispiel einer Distanzmessung, die mit dem Distanzsensor gemäß Figur 13 durchgeführt wird.

Der Sender 4 emittiert moduliertes Sendelicht in Form von Bursts 901. Ein solcher, vom Sender 4 ausgesendeter Burst 901 enthält, wie Figur 14 zeigt eine Anzahl von Perioden Tp der Sendermodulation. Der vom Sender 4 emittierte Burst 901 trifft auf ein Objekt und wird von dort zum Empfänger 5 zurückreflektiert und trifft dort als zeitversetztes Empfangslicht-Burst 902 auf.

Als Grobmessung wird die Laufzeitdifferenz des Empfangslicht-Bursts 902 zum Burst 901 als T1 = n*Tp berechnet, d.h. die Laufzeit wird als ganzzahliges Vielfaches (n=ganze Zahl) von Periodendauern bestimmt.

Als Feinmessung wird der Phasenversatz dT2 als Empfangslicht-Bursts 902 zum Burst 901 berechnet.

Die gesamte Laufzeit ergibt sich aus der Summe n*Tp+dT2.

Weiterhin ist es möglich, die Phasenmessung über mehrere Perioden des Bursts 901 durchzuführen

Bei dieser Ausführungsform ist zweckmäßig eine feste Phasenbeziehung zwischen der Modulation der Lichtstrahlen3 und dem Takt des Analog-Digital-Wandlers (100) gegeben.

Alternativ kann die Gesamtlaufzeit auch durch Korrelation des Sende- und Empfangssignals erfolgen.

Figur 15 zeigt eine Modifikation der Ausführungsform gemäß Figur 14. In diesem Fall emittiert der Sender 4 anstelle eines Bursts 901 einen Chirp 801, bei den sich die Frequenz und/oder Phase der Modulation der Lichtstrahlen 3 ändert. Entsprechend wird am Empfänger 5 ein Empfangslicht-Chirp 802 erhalten. Die Distanzbestimmung erfolgt analog zur Ausführungsform gemäß Figur 14.

Der Vorteil bei dieser Ausführungsform besteht darin, dass nicht eindeutige Messergebnisse der Phasenmessung durch Messungen bei niedrigen Frequenzen eindeutig einem Entfernungsbereich zugeordnet werden können.

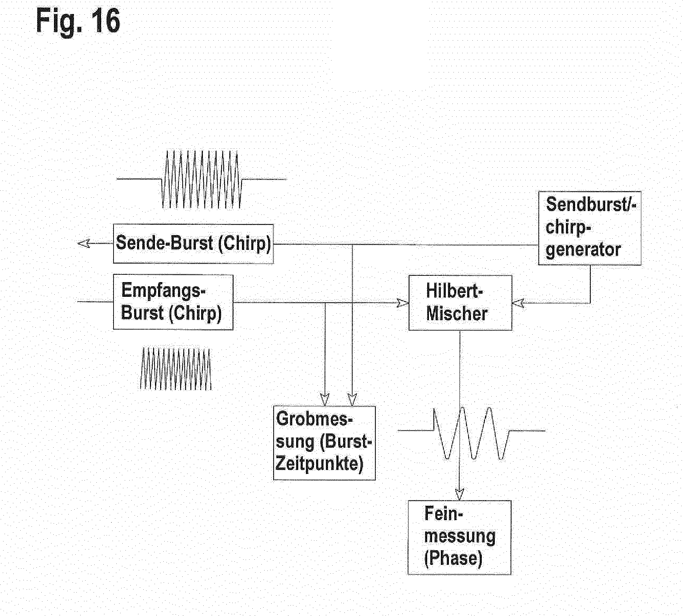

Figur 16 zeigt das Ablaufschema der Distanzmessung für die Ausführungsform gemäß Figur 15.

Der Sende- und Empfangs-Chirp (Chirp 801 und Empfangslicht-Chirp 802) werden durch einen Hilbert-Mischer, d.h. einem digitalen Filter 110, in dem eine Hilbert-Transformation durchgeführt wird, und einem Multiplizierer 120 in einen niederfrequenten Bereich übertragen. Dort werden die Phasenanteile mit langsamer Messtechnik ausgewertet und in Phasenverschiebungen zwischen Sendesignal und Empfangssignal umgerechnet. Der Sende-Chirp muss nicht kontinuierlich sein, sondern kann auch abschnittsweise in Frequenzsprüngen gestaltet sein. Durch die Zeitdifferenz der Zeitpunkte von Sendeburst/Empfangsburst kann die grobe Zeitmessung (Grobmessung) erfolgen.

### Bezugszeichenliste

- (1): Optischer Sensor
- (2): Gehäuse
- (2a): Gehäuse
- (2b): Gehäuse
- (3): Lichtstrahlen
- (4): Sender
- (5): Empfänger
- (6): Reflektor
- (7): Auswerteeinheit
- (35): Signaleingang
- (36): Signalausgang
- (40): Antialiasing-Filter
- (90): Signalausgang
- (90`): Signalausgang
- (100): Analog-Digital-Wandler
- (110): digitales Filter
- (120): Multiplizierer
- (125): Vorverarbeitungseinheit
- (130): Auswertestufe
- (200): Wandler-Steuerung
- (220): Signaleinheit
- (300): Modulationseinheit
- (310): Sender-Controller
- (320): Empfänger-Controller
- (330): Sender-Empfänger-Controller
- (320'): Empfänger-Controller
- (410): Block
- (410'): Block
- (420): Block
- (420'): Block
- (430): Ablaufsteuerung
- (430'): Ablaufsteuerung
- (801): Chirp
- (802): Empfangslicht-Chirp
- (901): Burst
- (902): Empfangslicht-Burst

- (z): Zielobjekt

## Patentansprüche

1. Optischer Sensor (1) zur Erfassung von Objekten in einem Überwachungsbereich mit wenigstens einem Lichtstrahlen (3) emittierenden Sender (4), mit wenigstens einem Lichtstrahlen (3) empfangenden Empfänger (5), und mit einer Auswerteeinheit (7), in welcher abhängig von Empfangssignalen des Empfängers (5) ein Objektfeststellungssignal generiert wird, wobei
den Lichtstrahlen (3) eine Amplitudenmodulation aufgeprägt ist, wobei die Auswerteeinheit (7) einen Analog-Digital-Wandler (100), in welchem die Empfangssignale in einem Takt des Analog-Digital-Wandlers (100) digitalisiert werden, und ein digitales Filter (110), mittels dessen eine Transformation des digitalisierten Empfangssignals in ein komplexwertiges Signal erfolgt, aufweist,
**dadurch gekennzeichnet,**
**dass** die Auswerteeinheit einen Multiplizierer (120), in dem das komplexwertige Signal mit einem komplexwertigen Hilfssignal multipliziert wird, aufweist, wobei am Ausgang des Multiplizierers (120) ein komplexwertiges Ausgangssignal in einem Basisband, dessen Frequenzen niedriger als die Frequenzen der Amplitudenmodulation sind, erhalten wird, und wobei aus dem komplexwertigen Ausgangssignal das Objektfeststellungssignal generiert wird.

2. Optischer Sensor (1) nach Anspruch 1, **dadurch gekennzeichnet, dass** eine feste Phasenbeziehung zwischen der Multiplikation im Multiplizierer (120) und dem Takt des Analog-Digital-Wandlers (100) gegeben ist.

3. Optischer Sensor (1) nach Anspruch 2, **dadurch gekennzeichnet, dass** der Takt des Analog-Digital-Wandlers (100) dem Multiplizierer (120) zugeführt ist.

4. Optischer Sensor (1) nach einem der Ansprüche 2 oder 3, **dadurch gekennzeichnet, dass** die Rate der im Multiplizierer (120) durchgeführten Multiplikationen dem Takt des Analog-Digital-Wandlers (100) entspricht, ein ganzzahliges Vielfaches des Takts des Analog-Digital-Wandlers (100) oder ein ganzzahliger Teiler oder rationaler Faktor des Takts des Analog-Digital-Wandlers (100) ist.

5. Optischer Sensor (1) nach einem der Ansprüche 1 bis 4, **dadurch gekennzeichnet, dass** im digitalen Filter (110) eine Hilbert-Transformation durchgeführt wird.

6. Optischer Sensor (1) nach einem der Ansprüche 1 bis 5, **dadurch gekennzeichnet, dass** das digitale Filter (110) ein FIR-Filter oder ein IIR-Filter ist.

7. Optischer Sensor (1) nach einem der Ansprüche 1 bis 6, **dadurch gekennzeichnet, dass** mittels des digitalen Filters (110) das digitalisierte Empfangssignal gefiltert wird.

8. Optischer Sensor (1) nach einem der Ansprüche 1 bis 7, **dadurch gekennzeichnet, dass** eine feste Phasenbildung zwischen der Modulation der Lichtstrahlen (3) und dem Takt des Analog-Digital-Wandlers (100) gegeben ist.

9. Optischer Sensor (1) nach einem der Ansprüche 1 bis 8, **dadurch gekennzeichnet, dass** eine dem Takt des Analog-Digital-Wandlers (100) entsprechende Wandlerfrequenz des Analog-Digital-Wandlers (100) niedriger ist als die Modulationsfrequenz der Lichtstrahlen (3).

10. Optischer Sensor (1) nach einem der Ansprüche 1 bis 9, **dadurch gekennzeichnet, dass** der Analog-Digital-Wandler (100) mit einer Wandler-Steuerung (200) gesteuert wird.

11. Optischer Sensor (1) nach einem der Ansprüche 1 bis 10, **dadurch gekennzeichnet, dass** dem Analog-Digital-Wandler (100) ein Filter vorgeordnet ist.

12. Optischer Sensor (1) nach Anspruch 11, **dadurch gekennzeichnet, dass** das Filter ein Bandpass- oder Tiefpass-Filter ist.

13. Optischer Sensor (1) nach einem der Ansprüche 1 bis 12, **dadurch gekennzeichnet, dass** Funktionselemente der Auswerteeinheit (7) in Form einer FPGA- und/oder ASIC-Logik ausgeführt sind.

14. Optischer Sensor (1) nach einem der Ansprüche 1 bis 13, **dadurch gekennzeichnet, dass** Funktionselemente der Auswerteeinheit (7) in Form von Software-Modulen ausgeführt sind.

15. Optischer Sensor (1) nach einem der Ansprüche 1 bis 14, **dadurch gekennzeichnet, dass** dieser ein Lichttaster, eine Lichtschranke, eine Reflexions-Lichtschranke, ein Lichtvorhang oder ein Reflexions-Lichtvorhang ist.

16. Optischer Sensor (1) nach Anspruch 15, **dadurch gekennzeichnet, dass** in der Auswerteeinheit (7) durch Überprüfen, ob in dem komplexwertigen Ausgangssignal eine der Modulation der Lichtstrahlen (3) entsprechende Modulation vorhanden ist, eine Strahlunterbrechung oder Nichtunterbrechung der Lichtstrahlen (3) festgestellt wird.

17. Optischer Sensor (1) nach einem der Ansprüche 1 bis 14, **dadurch gekennzeichnet, dass** dieser ein Distanzsensor ist, der nach einem Phasenmessverfahren oder nach einem Impuls-Laufzeit-Verfahren arbeitet.

18. Optischer Sensor (1) nach Anspruch 16, **dadurch gekennzeichnet, dass** in der Auswerteeinheit (7) eine Phasenverschiebung des komplexwertigen Ausgangssignals gegenüber den modulierten, vom Sender (4) ausgesendeten Lichtstrahlen (3) ermittelt wird.

19. Optischer Sensor (1) nach Anspruch 18, **dadurch gekennzeichnet, dass** die Modulation der Lichtstrahlen (3) in ihrer Frequenz und/oder Phase variiert wird.

20. Optischer Sensor (1) nach einem der Ansprüche 17 bis 19, **dadurch gekennzeichnet, dass** der Sender (4) Lichtstrahlen (3) in Form von Amplitudenmodulationen aufweisenden Bursts (901) oder Chirps (801) emittiert.

21. Optischer Sensor (1) nach Anspruch 20, **dadurch gekennzeichnet, dass** eine grobe Distanzmessung durch die Ermittlung des zeitlichen Versatzes des emittierten und empfangenen Bursts (901) oder Chirps (801) ermittelt wird.

22. Optischer Sensor (1) nach Anspruch 21, **dadurch gekennzeichnet, dass** der zeitliche Versatz als ganzzahliges Vielfaches von Perioden des Bursts (901) oder Chirps (801) ermittelt wird.

23. Optischer Sensor (1) nach einem der Ansprüche 21 oder 22, **dadurch gekennzeichnet, dass** eine Fein-Distanzmessung durch Ermittlung der Phasenverschiebung des emittierten und empfangenen Bursts (901) oder Chirps (801) ermittelt wird.

24. Optischer Sensor (1) nach Anspruch 23, **dadurch gekennzeichnet, dass** die Phasenmessung über mehrere Perioden des Bursts (901) oder Chirps (801) durchgeführt wird.

25. Optischer Sensor (1) nach einem der Ansprüche 1 bis 24, **dadurch gekennzeichnet, dass** dieser ein Sicherheitssensor ist.

26. Verfahren zur Erfassung von Objekten in einem Überwachungsbereich mittels eines optischen Sensors (1) mit wenigstens einem Lichtstrahlen (3) emittierenden Sender (4), mit wenigstens einem Lichtstrahlen (3) empfangenden Empfänger (5), und mit einer Auswerteeinheit (7), in welcher abhängig von Empfangssignalen des Empfängers (5) ein Objektfeststellungssignal generiert wird, wobei
den Lichtstrahlen (3) eine Amplitudenmodulation aufgeprägt ist, und die Auswerteeinheit (7) einen Analog-Digital-Wandler (100), in welchem die Empfangssignale in einem Takt des Analog-Digital-Wandlers (100) digitalisiert werden, und ein digitales Filter (110), mittels dessen eine Transformation des digitalisierten Empfangssignals in ein komplexwertiges Signal erfolgt, aufweist,
**dadurch gekennzeichnet,**
**dass** die Auswerteeinheit einen Multiplizierer (120), in dem das komplexwertige Signal mit einem komplexwertigen Hilfssignal multipliziert wird, aufweist, wobei am Ausgang des Multiplizierers (120) ein komplexwertiges Ausgangssignal in einem Basisband, dessen Frequenzen niedriger als die Frequenzen der Amplitudenmodulation sind, erhalten wird, und wobei aus dem komplexwertigen Ausgangssignal das Objektfeststellungssignal generiert wird.

## Claims

1. An optical sensor (1) for detecting objects in a monitoring area, having at least one transmitter (4) emitting light beams (3), having at least one receiver (5) receiving light beams (3), and having an evaluation unit (7) in which an object detection signal is generated as a function of received signals from the receiver (5),
whereby an amplitude modulation is imparted to the light beams (3),
wherein the evaluation unit (7) has an analogue-digital converter (100), in which the received signals are digitised in a clock of the analogue-digital converter (100), and a digital filter (110), by means of which the digitised received signal is transformed into a complex-value signal,
**characterised in that**
the evaluation unit has a multiplier (120), in which the complex-value signal is multiplied by a complex-value auxiliary signal, a complex-value output signal being obtained at the output of the multiplier (120) in a baseband whose frequencies are lower than the frequencies of the amplitude modulation, and the object detection signal being generated from the complex-value output signal.

2. An optical sensor (1) according to claim 1, **characterised in that** there is a fixed phase relationship between the multiplication in the multiplier (120) and the clock of the analogue-to-digital converter (100).

3. An optical sensor (1) according to claim 2, **characterised in that** the clock of the analogue-to-digital converter (100) is fed to the multiplier (120).

4. An optical sensor (1) according to one of claims 2 or 3, **characterised in that** the rate of the multiplications carried out in the multiplier (120) corresponds to the clock of the analogue-to-digital converter (100), is an integer multiple of the clock of the analogue-to-digital converter (100) or is an integer divisor or rational factor of the clock of the analogue-to-digital converter (100).

5. An optical sensor (1) according to one of claims 1 to 4, **characterised in that** a Hilbert transform is performed in the digital filter (110).

6. An optical sensor (1) according to any one of claims 1 to 5, **characterised in that** the digital filter (110) is an FIR filter or an IIR filter.

7. An optical sensor (1) according to one of claims 1 to 6, **characterised in that** the digitised received signal is filtered by means of the digital filter (110).

8. An optical sensor (1) according to one of claims 1 to 7, **characterised in that** there is a fixed phase formation between the modulation of the light beams (3) and the clock of the analogue-to-digital converter (100).

9. An optical sensor (1) according to one of claims 1 to 8, **characterised in that** a converter frequency of the analogue-to-digital converter (100) corresponding to the clock of the analogue-to-digital converter (100) is lower than the modulation frequency of the light beams (3).

10. An optical sensor (1) according to one of claims 1 to 9, **characterised in that** the analogue-to-digital converter (100) is controlled by a converter controller (200).

11. An optical sensor (1) according to one of claims 1 to 10, **characterised in that** a filter is arranged upstream of the analogue-to-digital converter (100).

12. An optical sensor (1) according to claim 11, **characterised in that** the filter is a bandpass or low-pass filter.

13. An optical sensor (1) according to one of claims 1 to 12, **characterised in that** functional elements of the evaluation unit (7) are implemented in the form of FPGA and/or ASIC logic.

14. An optical sensor (1) according to one of claims 1 to 13, **characterised in that** functional elements of the evaluation unit (7) are designed in the form of software modules.

15. An optical sensor (1) according to one of claims 1 to 14, **characterised in that** it is a light sensor, a light barrier, a retro-reflective light barrier, a light curtain or a retro-reflective light curtain.

16. An optical sensor (1) according to claim 15, **characterised in that** a beam interruption or non-interruption of the light beams (3) is detected in the evaluation unit (7) by checking whether a modulation corresponding to the modulation of the light beams (3) is present in the complex-value output signal.

17. An optical sensor (1) according to one of claims 1 to 14, **characterised in that** this is a distance sensor which operates according to a phase measurement method or according to a pulse transit time method.

18. An optical sensor (1) according to claim 16, **characterised in that** a phase shift of the complex-value output signal relative to the modulated light beams (3) emitted by the transmitter (4) is determined in the evaluation unit (7).

19. An optical sensor (1) according to claim 18, **characterised in that** the modulation of the light beams (3) is varied in its frequency and/or phase.

20. An optical sensor (1) according to one of claims 17 to 19, **characterised in that** the transmitter (4) emits light beams (3) in the form of bursts (901) or chirps (801) having amplitude modulations.

21. An optical sensor (1) according to claim 20, **characterised in that** a coarse distance measurement is determined by determining the temporal offset of the emitted and received burst (901) or chirp (801).

22. An optical sensor (1) according to claim 21, **characterised in that** the time offset is determined as an integer multiple of periods of the burst (901) or chirp (801).

23. An optical sensor (1) according to one of claims 21 or 22, **characterised in that** a fine distance measurement is determined by determining the phase shift of the emitted and received burst (901) or chirp (801).

24. An optical sensor (1) according to claim 23, **characterised in that** the phase measurement is carried out over several periods of the burst (901) or chirp (801).

25. An optical sensor (1) according to one of claims 1 to 24, **characterised in that** it is a safety sensor.

26. A method for detecting objects in a monitoring area by means of an optical sensor (1) with at least one transmitter (4) emitting light beams (3), with at least one receiver (5) receiving light beams (3), and with an evaluation unit (7) in which an object detection signal is generated as a function of received signals from the receiver (5),
wherein an amplitude modulation is impressed on the light beams (3),
and the evaluation unit (7) has an analogue-digital converter (100), in which the received signals are digitised in a clock of the analogue-digital converter (100), and a digital filter (110), by means of which the digitised received signal is transformed into a complex-value signal,
**characterised in that**
the evaluation unit has a multiplier (120) in which the complex-value signal is multiplied by a complex-value auxiliary signal, a complex-value output signal being obtained at the output of the multiplier (120) in a baseband whose frequencies are lower than the frequencies of the amplitude modulation, and the object detection signal being generated from the complex-value output signal.

## Revendications

1. Capteur optique (1) pour la détection d'objets dans une zone de surveillance, comportant au moins un émetteur (4) émettant des faisceaux lumineux (3), comportant au moins un récepteur (5) recevant des faisceaux lumineux (3), et comportant une unité d'évaluation (7) dans laquelle un signal de détection d'objet est généré en fonction des signaux reçus du récepteur (5),
une modulation d'amplitude est imprimée sur les faisceaux lumineux (3),
l'unité d'évaluation (7) comporte un convertisseur analogique-numérique (100), dans lequel les signaux reçus sont numérisés dans une horloge du convertisseur analogique-numérique (100), et un filtre numérique (110), au moyen duquel le signal reçu numérisé est transformé en un signal à valeur complexe,
**caractérisé en ce que**
l'unité d'évaluation comporte un multiplicateur (120), dans lequel le signal à valeur complexe est multiplié par un signal auxiliaire à valeur complexe, un signal de sortie à valeur complexe étant obtenu à la sortie du multiplicateur (120) dans une bande de base dont les fréquences sont inférieures aux fréquences de la modulation d'amplitude, et le signal de détection d'objet étant généré à partir du signal de sortie à valeur complexe.

2. Capteur optique (1) selon la revendication 1, **caractérisé par** une relation de phase fixe entre la multiplication dans le multiplicateur (120) et l'horloge du convertisseur analogique-numérique (100).

3. Capteur optique (1) selon la revendication 2, **caractérisé en ce que** l'horloge du convertisseur analogique-numérique (100) est transmise au multiplicateur (120).

4. Capteur optique (1) selon l'une des revendications 2 ou 3, **caractérisé en ce que** la vitesse des multiplications effectuées dans le multiplicateur (120) correspond à l'horloge du convertisseur analogique-numérique (100), est un multiple entier de l'horloge du convertisseur analogique-numérique (100) ou est un diviseur entier ou un facteur rationnel de l'horloge du convertisseur analogique-numérique (100).

5. Capteur optique (1) selon l'une des revendications 1 à 4, **caractérisé par le fait qu'**une transformation de Hilbert est effectuée dans le filtre numérique (110).

6. Capteur optique (1) selon l'une des revendications 1 à 5, **caractérisé en ce que** le filtre numérique (110) est un filtre FIR ou un filtre IIR.

7. Capteur optique (1) selon l'une des revendications 1 à 6, **caractérisé en ce que** le signal reçu numérisé est filtré au moyen du filtre numérique (110).

8. Capteur optique (1) selon l'une des revendications 1 à 7, **caractérisé par** une formation de phase fixe entre la modulation des faisceaux lumineux (3) et l'horloge du convertisseur analogique-numérique (100).

9. Capteur optique (1) selon l'une des revendications 1 à 8, **caractérisé par le fait qu'**une fréquence de convertisseur du convertisseur analogique-numérique (100) correspondant à l'horloge du convertisseur analogique-numérique (100) est inférieure à la fréquence de modulation des faisceaux lumineux (3).

10. Capteur optique (1) selon l'une des revendications 1 à 9, **caractérisé en ce que** le convertisseur analogique-numérique (100) est commandé par un dispositif de commande de convertisseur (200).

11. Capteur optique (1) selon l'une des revendications 1 à 10, **caractérisé par le fait qu'**un filtre est placé en amont du convertisseur analogique-numérique (100).

12. Capteur optique (1) selon la revendication 11, **caractérisé en ce que** le filtre est un filtre passe-bande ou passe-bas.

13. Capteur optique (1) selon l'une des revendications 1 à 12, **caractérisé en ce que** les éléments fonctionnels de l'unité d'évaluation (7) sont mis en oeuvre sous forme de logique FPGA et/ou ASIC.

14. Capteur optique (1) selon l'une des revendications 1 à 13, **caractérisé en ce que** les éléments fonctionnels de l'unité d'évaluation (7) sont conçus sous forme de modules logiciels.

15. Capteur optique (1) selon l'une des revendications 1 à 14, **caractérisé par le fait qu'**il s'agit d'un capteur de lumière, d'une barrière lumineuse, d'une barrière lumineuse rétro-réfléchissante, d'un rideau de lumière ou d'un rideau de lumière rétroréfléchissant.

16. Capteur optique (1) selon la revendication 15, **caractérisé par le fait qu'**une interruption ou une non-interruption des faisceaux lumineux (3) est détectée dans l'unité d'évaluation (7) en vérifiant si une modulation correspondant à la modulation des faisceaux lumineux (3) est présente dans le signal de sortie à valeur complexe.

17. Capteur optique (1) selon l'une des revendications 1 à 14, **caractérisé par le fait qu'**il s'agit d'un capteur de distance fonctionnant selon une méthode de mesure de phase ou selon un procédé de temps de transit des impulsions.

18. Capteur optique (1) selon la revendication 16, **caractérisé par le fait qu'**un déphasage du signal de sortie à valeur complexe par rapport aux faisceaux lumineux modulés (3) émis par l'émetteur (4) est déterminé dans l'unité d'évaluation (7).

19. Capteur optique (1) selon la revendication 18, **caractérisé en ce que** la modulation des faisceaux lumineux (3) varie en fréquence et/ou en phase.

20. Capteur optique (1) selon l'une des revendications 17 à 19, **caractérisé en ce que** l'émetteur (4) émet des faisceaux lumineux (3) sous forme de rafales (901) ou de gazouillements (801) présentant des modulations d'amplitude.

21. Capteur optique (1) selon la revendication 20, **caractérisé par le fait qu'**une mesure grossière de la distance est déterminée en déterminant le décalage temporel de la salve (901) ou du gazouillement (801) émis et reçu.

22. Capteur optique (1) selon la revendication 21, **caractérisé en ce que** le décalage temporel est déterminé comme un multiple entier des périodes de la salve (901) ou du gazouillement (801).

23. Capteur optique (1) selon l'une des revendications 21 ou 22, **caractérisé par le fait qu'**une mesure fine de la distance est déterminée en déterminant le déphasage de la salve (901) ou du gazouillement (801) émis et reçu.

24. Capteur optique (1) selon la revendication 23, **caractérisé en ce que** la mesure de la phase est effectuée sur plusieurs périodes de la rafale (901) ou du gazouillement (801).

25. Capteur optique (1) selon l'une des revendications 1 à 24, **caractérisé par le fait qu'**il s'agit d'un capteur de sécurité.

26. Procédé de détection d'objets dans une zone de surveillance au moyen d'un capteur optique (1) doté d'au moins un émetteur (4) émettant des faisceaux lumineux (3), d'au moins un récepteur (5) recevant des faisceaux lumineux (3) et d'une unité d'évaluation (7) dans laquelle un signal de détection d'objet est généré en fonction des signaux reçus du récepteur (5),
dans lequel une modulation d'amplitude est appliquée aux faisceaux lumineux (3),
et l'unité d'évaluation (7) comporte un convertisseur analogique-numérique (100), dans lequel les signaux reçus sont numérisés dans une horloge du convertisseur analogique-numérique (100), et un filtre numérique (110), au moyen duquel le signal reçu numérisé est transformé en un signal à valeur complexe,
**caractérisé en ce que**
l'unité d'évaluation comporte un multiplicateur (120) dans lequel le signal à valeur complexe est multiplié par un signal auxiliaire à valeur complexe, un signal de sortie à valeur complexe étant obtenu à la sortie du multiplicateur (120) dans une bande de base dont les fréquences sont inférieures aux fréquences de la modulation d'amplitude, et le signal de détection d'objet étant généré à partir du signal de sortie à valeur complexe.
